# EUROPÄISCHE PATENTSCHRIFT

(11) **EP 0 681 138 B1**
(45) Veröffentlichungstag und Bekanntmachung des Hinweises auf die Patenterteilung: **17.12.1997**
(21) Anmeldenummer: 95105569.8
(22) Anmeldetag: 12.04.1995
(51) Int. Cl.: F16L 37/084, F01N 7/08

(54) **Kupplungsvorrichtung für eine Auspuffleitung**
Coupling device for exhaust pipe
Dispositif de raccord pour tuyau d'échappement

(30) Priorität: 05.05.1994 AT 939/94
(43) Veröffentlichungstag der Anmeldung: 08.11.1995
(73) Patentinhaber: STEYR-DAIMLER-PUCH AKTIENGESELLSCHAFT, 1010 Wien (AT)
(72) Erfinder: Pfusterschmid, Johann, A-4432 Ernsthofen (AT)

(56) Entgegenhaltungen:
- DE-A- 2 713 735
- DE-A- 3 345 184
- DE-A- 3 428 597

## Beschreibung

Die Erfindung handelt von einer Kupplungsvorrichtung für aus einem Auspuffrohr und einem abnehmbar aufgesteckten Endrohr bestehende Auspuffleitungen, wie sie vor allem bei Ackerschleppern, Baumaschinen oder Erdbewegungsmaschinen Verwendung finden. Dabei ist das Auspuffrohr meist, aber nicht immer, unter der Motorhaube horizontal geführt und endet in einem aufwärts gerichteten Knie, in das dann von außerhalb der Motorhaube das Endrohr, meist senkrecht, eingesteckt wird. Die Erfindung ist aber ebenso für eine durchwegs horizontale Auspuffleitung geeignet.

Um die Motorhaube öffnen zu können, muß das Endrohr abgenommen werden, was möglichst schnell und ohne Werkzeug möglich sein soll. Das erfordert eine Verbindung, deren Bauteile trotz erhöhter Temperatur und korrosiver Gase lösbar bleiben. Trotzdem soll die Verbindung so fest sein, daß sich das Endrohr, das meist einen Auspufftopf oder Schalldämpfer trägt und daher schwer ist, nicht durch Erschütterungen löst. Oft ist es auch erwünscht, das Endrohr in einer bestimmten Winkelstellung zu befestigen.

Es wurden bereits viele Lösungen für dieses Problem vorgeschlagen, sowohl für die Steckverbindung zwischen den Rohren als auch für dazugehörige Niederhalteelemente. Aus der DE-OS 27 13 735 ist ein solches bekannt. Dort sind zwei schwenkbar gelagerte Bügel, davon einer mit einem Handgriff und zwei exzentrischen Verriegelungselementen, diverse Befestigungskonsolen und eine Zugfeder nötig. Der konstruktive Aufwand ist also erheblich, trotzdem sind viele Teile korrosionsgefährdet und das Abnehmen des Rohres erfordert einige Handgriffe.

Es ist daher Ziel der Erfindung, eine Kupplungsvorrichtung zu schaffen, die allen oben aufgezählten Anforderungen genügt und kurzum zuverlässig, billigst herzustellen und einfachst zu bedienen ist.

Dazu ist erfindungsgemäß an einem der beiden Rohre eine axial ausgerichtete und radial abstehende Lasche und am anderen Rohr ein einseitig eingespannter Federbügel vorgesehen, wobei der Federbügel eine Kontaktfläche aufweist, die auf einer der eingespannten Seite des Federbügels abgewandten Haltekante der Lasche aufreitet. Der Federbügel ist das einzige bewegliche Element, obwohl er eingespannt ist. Es gibt also keine Gelenke, die sich durch Korrosion festfressen könnten. Die Lasche am anderen Rohrteil ist einfach angeschweißt. Wenn das Endrohr mit ausreichender Führungslänge aufgesteckt ist, genügt eine einzige Lasche und ein einziger Federbügel zu dessen Sicherung, sowohl in axialer als auch in Umfangsrichtung. Zum Abnehmen des Endrohres ist der Federbügel gegen seine Federkraft leicht wegschwenkbar, trotzdem hält er das Endrohr sicher fest, weil er dazu auf Zug beansprucht ist. Die Vorrichtung ist also sehr billig und trotzdem zuverlässig und leicht zu bedienen.

Die vom Federbügel ausgeübte Zugkraft ist besonders hoch, wenn die Bahn der Kontaktfläche beim Zurückfedern des Federbügels mit der Haltekante einen spitzen Winkel bildet (Anspruch 2), vorzugsweise einen Winkel, der kleiner als der Reibungswinkel zwischen Kontaktfläche und Haltekante ist (Anspruch 3).

Für die Gestaltung des Federbügels gibt es im Rahmen der Erfindung viele Möglichkeiten. Die Kontaktfläche könnte etwa eine seitlich angebrachte Nase sein. Besonders einfache Herstellung und symmetrische Krafteintragung wird erreicht, wenn der Federbügel einen Schlitz aufweist, dessen der eingespannten Seite des Federbügels abgewandtes Ende die Kontaktfläche bildet (Anspruch 4).

Weiters kann der Federbügel so ausgebildet sein, daß er von der eingespannten Seite ausgehend eine erste Zone geringer Biegesteifigkeit und daran anschließend eine zweite Zone höherer Biegesteifigkeit aufweist, in der die Kontaktfläche ausgebildet ist (Anspruch 5). Wenn der Federbügel aus Blech gestanzt ist, braucht die erste Zone nur etwas schmaler sein. Damit läßt sich die Bahn der Kontaktfläche beim Zurückziehen des Federbügels den Erfordernissen anpassen. Wenn dann noch die zweite Zone weit über die Kontaktfläche hinaus verlängert ist (Anspruch 6), erhält man eine Handhabe mit langem Hebelarm, um den Federbügel mit geringem Kraftaufwand abheben zu können.

Die Eignung der erfindungsgemäßen Kupplung ist davon unabhängig, ob das Endrohr auf das Auspuffrohr aufgesteckt oder in dieses eingesteckt ist, und unabhängig davon, an welchem Rohrteil die Lasche oder der Federbügel angebracht ist. Vorzugsweise ist der Federbügel am Auspuffrohr oder einem mit diesem verbundenen Teil angeschraubt und das Endrohr ist mit der Lasche versehen, wobei das Endrohr das Auspuffrohr übergreift (Anspruch 7). So kann der Federbügel unter der Motorhaube angeordnet sein, aber von außerhalb der Motorhaube abgehoben werden.

Im folgenden wird die Erfindung anhand von Abbildungen einer bevorzugten Ausführungsform beschrieben und erläutert. Es stellen dar:
- Figur 1:: Einen Vertikalschnitt durch eine Ausführungform der erfindungsgemäßen Kupplung,
- Figur 2:: Einen Querschnitt nach A-B in Figur 1.

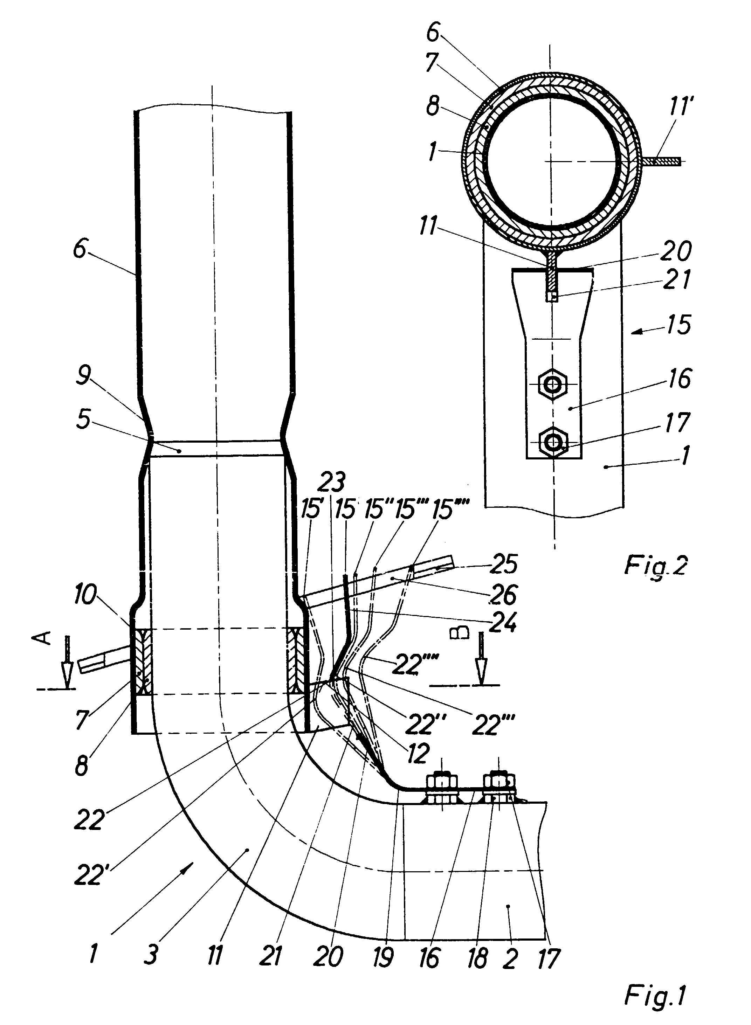

In den Figuren 1 und 2 ist ein Stück einer Auspuffleitung eines Traktors dargestellt. Sie besteht im wesentlichen aus einem Auspuffrohr 1 und einem Endrohr 6. Das Auspuffrohr 1 zeigt, von einem nicht dargestellten Auspuffkrümmer kommend, zuerst ein gerades horizontales Rohr 2, dann einen Rohrkrümmer 3 und ein vertikales Rohr 4, das mit einem konischen Rand 5 endet. Das Endrohr 6 übergreift das Auspuffrohr 1, bildet an seinem unteren Ende eine Erweiterung 10 und eine zum konischen Rand 5 passende Einschnürung 9. Zwischen der Erweiterung 10 und dem vertikalen Rohr 4 sind zwei Reibringe 7,8 angebracht, jeder ist mit seinem Rohrteil auf geeignete Weise verbunden.

Erfindungsgemäß ist nun am Endrohr 6, genauer: an dessen Erweiterung 10, eine Lasche 11 angeschweißt, die achsial ausgerichtet ist und radial absteht. In der Regel genügt eine derartige Lasche, es können jedoch mehrere Laschen und damit zusammenwirkende Elemente am anderen Rohr beliebig am Umfang verteilt sein, was in Figur 2 mit 11' angedeutet ist; beispielsweise für den Fall einer durchwegs horizontalen Auspuffleitung. Die zweite Lasche 11' könnte aber auch den Zweck haben, das Endrohr in zwei verschiedenen Winkelstellungen aufsetzen zu können. Die Lasche 11 weist in achsialer Richtung oben eine Haltekante 12 auf, auf deren Wirkungsweise später eingegangen wird.

Auf dem horizontalen Rohr 2 des Auspuffrohres 1 ist ein Federbügel 15 einseitig mit seinem Fuß befestigt,insbesondere angeschweißt. Dazu sind Schrauben 18 mit dem horizontalen Rohr 2 verschraubt und der mit nicht sichtbaren Bohrungen versehene Fuß 16 ist mittels der Muttern 17 festgezogen. Der Federbügel 15 weist, an den Fuß 16 anschließend, eine erste Biegung 19 auf, an die ein breiterer (Figur 2) gerader Teil 20 anschließt, der mittig und in Längsrichtung mit einem Schlitz 21 versehen ist. Das obere Ende des Schlitzes 21 bildet eine Kontaktfläche 22. Diese ist im dargestellten Ausführungsbeispiel nur die Blechkante des Federbügels 15, doch könnte beim Ausstanzen des Schlitzes 21 auch eine gebördelte größere Kontaktfläche geschaffen werden. An diese schließt über eine zweite Biegung 23 eine Verlängerung 24 an. Diese kann von beliebiger Form sein. Zweckmäßigerweise ist sie jedoch so geformt, daß sie durch eine Öffnung 26 der Motorhaube 25 hindurchreicht, bzw durch diese von außen bewegbar ist.

Die Wirkungsweise der erfindungsgemäßen Kupplungsvorrichtung ist die folgende: in der in Figur 1 gezeigten dick ausgezogenen Stellung hält der Federbügel 15 das auf das Auspuffrohr 1 aufgesteckte Endrohr 6 fest. Da der Federbügel 15 an seinem Fuß 16 eingespannt ist und eine Biegefeder darstellt, die sich unter ihrer Spannkraft strecken möchte, reitet dessen Kontaktfläche 22 auf der Haltekante 12 der Lasche 11 auf. Der Federbügel 15 ist in mehreren Stellungen 15' bis 15"" dargestellt. Entsprechend nimmt auch die Kontaktfläche 22 verschiedene Stellungen ein. Die gedachte Verbindungslinie dieser Stellungen 22', 22, 22", 22'" und 22"" ist deren Bahnkurve. Die Tangente an diese Bahnkurve in der dick gezeichneten Stellung 15 schließt mit der Haltekante 12 einen spitzen Winkel ein. Durch diesen spitzen Winkel wird mit dem leichten und kleinen Federbügel 15 eine verhältnismäßig große Haltekraft erzeugt vorwiegend durch Zugbelastung des Federbügels 15. Vorzugsweise ist dieser Winkel kleiner als der Reibungswinkel zwischen Haltekante 12 und Kontaktfläche 22, dann kann sich der Federbügel 15 nicht aus eigener Kraft von der Lasche 11 lösen.

Soll nun das Endrohr 6, etwa zum Öffnen der Motorhaube 25, abgenommen werden, so wird von außen die Verlängerung 24 des Federbügels 15 in Figur 1 nach rechts gedrückt, bis in die Stellung 15"". Dabei wird die Kontaktfläche 22 von der Haltekante 12 abgezogen und das Endrohr 6 kann abgehoben werden. Das kann, bei geeigneter Formgebung der Verlängerung 24 mit einer Hand und mit einem Handgriff geschehen. Soll das Endrohr 6 später wieder aufgesetzt werden, so wird der Federbügel 15 von der entspannten Stellung 15' in die Stellung 15"" gebracht, das Endrohr 6 in der richtigen Winkelstellung aufgesteckt und der Federbügel 15 losgelassen.

## Patentansprüche

1. Kupplungsvorrichtung für eine aus einem Auspuffrohr (1) und einem abnehmbar aufgesteckten Endrohr (6) bestehende Auspuffleitung, **dadurch gekennzeichnet**, daß an einem der beiden Rohre (1;6) eine axial ausgerichtete und radial abstehende Lasche (11) und am anderen Rohr (6;1) ein einseitig eingespannter Federbügel (15) vorgesehen ist, wobei dieser eine Kontaktfläche (22) aufweist, die auf einer der eingespannten Seite des Federbügels (15) abgewandten Haltekante (12) der Lasche (11) aufreitet.

2. Kupplungsvorrichtung nach Anspruch 1, **dadurch gekennzeichnet**, daß die Bahn (22',22,22'',22''',22'''') der Kontaktfläche (22) beim Zurückfedern des Federbügels (15) mit der Haltekante (12) einen spitzen Winkel bildet.

3. Kupplungsvorrichtung nach Anspruch 2, **dadurch gekennzeichnet**, daß der spitze Winkel kleiner als der Reibungswinkel zwischen Kontaktfläche (22) und Haltekante (12) ist.

4. Kupplungsvorrichtung nach Anspruch 1, **dadurch gekennzeichnet**, daß der Federbügel (15) einen Schlitz (21) aufweist, dessen dem eingespannten Teil (16) des Federbügels (15) abgewandtes Ende die Kontaktfläche (22) bildet.

5. Kupplungsvorrichtung nach Anspruch 1, **dadurch gekennzeichnet**, daß der Federbügel (15) von dem eingespannten Teil (16) ausgehend eine erste Zone (16,19) geringer Biegesteifigkeit und daran anschließend eine zweite Zone (20) höherer Biegesteifigkeit aufweist, in der die Kontaktfläche (22) ausgebildet ist.

6. Kupplungsvorrichtung nach Anspruch 5, **dadurch gekennzeichnet**, daß die zweite Zone (20) über die Kontaktfläche (22) hinaus eine Verlängerung (24) bildet.

7. Kupplungsvorrichtung nach einem der Ansprüche 1 bis 6, **dadurch gekennzeichnet**, daß der Federbügel (15) am Auspuffrohr (1) oder einem mit diesem verbundenen Teil angeschraubt und daß das Endrohr (6) mit der Lasche (11) versehen ist, wobei das Endrohr (6) das Auspuffrohr (1) übergreift.

8. Kupplungsvorrichtung nach einem der Ansprüche 1 bis 7, **dadurch gekennzeichnet**, daß mehrere Federbügel (15) und Laschen (11,11') über den Umfang der Rohre (1,6) verteilt vorgesehen sind.

## Claims

1. Coupling device for an exhaust duct comprising an exhaust pipe (1) and a removably attached final pipe (6), **caracterized** in that one of the two pipes (1;6) comprises an axially aligned and radially protruding fin (11) and the other (6;1) of the two pipes a cantilevered spring bracket (15) with a contact face (22) riding on a crest (12) of the fin (11), this crest being on the off-side of the clamped end of the spring bracket (15).

2. Coupling device according to claim 1, **caracterized** in that the trajectory (22',22,22",22"',22"") of the contact face (22) when the spring bracket (15) springs back, forms an acute angle with the crest (12).

3. Coupling device according to claim 2, **caracterized** in that the acute angle is smaller than the angle of friction between the contact face (22) and the crest (12).

4. Coupling device according to claim 1, **caracterized** in that the spring bracket (15) has a slit (21) whose end on the off-side of the clamped end (16) of the spring bracket (15) constitutes the contact face (22).

5. Coupling device according to claim 1, **caracterized** in that the spring bracket (15) has a first zone (16,19) of lower flexural stiffness adjacent its clamped end (16), followed by a second zone (20) of higher flexural stiffness which comprises the contact face (22).

6. Coupling device according to claim 5, **caracterized** in that the second zone (20) has an extension (24) beyond the contact face (22).

7. Coupling device according to any of the claims 1 to 6, **caracterized** in that the spring bracket (15) is fixed to the exhaust pipe (1) or to an element fixed to it and that it is the final pipe (6) which bears the fin (11), the final pipe (6) overlapping the exhaust pipe (1).

8. Coupling device according to any of the claims 1 to 7, **caracterized** in that a number of spring brackets (15) and fins (11,11') are provided and distributed about the circumference of the pipes (1,6).

## Revendications

1. Raccord pour une conduite d'échappement comportant un tuyau d'échappement (1) et un tuyau final (6), **caractérisé** en ce que l'un des deux tuyaux (1;6) comporte une bride (11) orientée axialement et protubérant radialement et l'autre des tuyaux (6;1) comporte un archet de ressort (15) dont une extrémité est encastrée, ce dernier comportant une face de contacte (22) qui chevauche sur une arrête de tenue (12) du coté distal à l'extrémité encastrée de la bride (11).

2. Raccord selon la revendication 1, **caractérisé** en ce que la trajectoire (22',22,22", 22'", 22"") de la face de contacte (22) lorsque l'archet de ressort (15) se détend, renferme un angle aigu avec l'arrête de tenue (12).

3. Raccord selon la revendication 2, **caractérisé** en ce que l'angle aigu est inférieur à l'angle de friction entre la face de contacte (22) et l'arrête de tenue (12).

4. Raccord selon la revendication 1, **caractérisé** en ce que l'archet de ressort (15) est pourvu d'une fente (21), dont l'extrémité opposée à l'extrémité encastrée de l'archet de ressort (15) constitue la surface de contacte (22).

5. Raccord selon la revendication 1, **caractérisé** en ce que l'archet de ressort (15) présente, en partant de l'extrémité encastrée (16), une première zone (16,19) de faible rigidité flexionnelle et ensuite une seconde zone (20) de rigidité flexionnelle supérieure, dans laquelle la face de contacte (22) est ammenagée.

6. Raccord selon la revendication 1, **caractérisé** en ce que la seconde zone (20) comporte un prolongement (24) au delà de la face de contacte (22).

7. Raccord selon l'une des revendications 1 à 6, **caractérisé** en ce que l'archet de ressort (15) est rattaché au tuyau d'échappement (1) ou à un élément relié à celui-ci et en ce que c'est le tuyau final (6) qui comporte la bride (11), le tuyau final (6) recouvrant le tuyau d'échappement (1).

8. Raccord selon l'une des revendications 1 à 7, **caractérisé** en ce que une pluralité d'archets de ressort (15) et de brides (11) sont prévus et distribués sur la circonférence des tuyaux (1,6).
